# EUROPÄISCHE PATENTANMELDUNG

(11) **EP 0 962 613 A2**
(43) Veröffentlichungstag der Anmeldung: **08.12.1999**
(21) Anmeldenummer: 99110415.9
(22) Anmeldetag: 28.05.1999
(51) Int. Cl.: E05C 1/02, A47B 96/00, A47G 1/06, F24F 7/00, F24B 15/00

(54) **Verriegelungselement**

(30) Priorität: 29.05.1998 DE 29809745 U
(71) Anmelder: BSH Bosch und Siemens Hausgeräte GmbH, 81669 München (DE)
(72) Erfinder: Keller, Hans Gerd Dipl.-Ing., 63179 Obertshausen (DE); Rückert, Wilfried Dipl.-Ing., 75045 Walzbachtal (DE); Neuschl, Helmut, 75015 Bretten (DE)

(57) **Zusammenfassung**

Verriegelungselement (2) mit Steckerflächen (6, 8), durch welche es in Verriegelungsstellung zwischen Schlitzränder einsteckbar ist. Ein Haken oder Fangarm (50) auf der Unterseite verhindert ein Herausfallen aus dem Schlitz (16).

## Beschreibung

Die Erfindung betrifft ein Verriegelungselement, welches in einem Schlitz eines ersten Bauelements zwischen einer Verriegelungsstellung und einer Entriegelungsstellung in Schlitzlängsrichtung verstellbar ist, um einen Verriegelungsteil des Verriegelungselements in einen zu sperrenden Bewegungsweg, bzw. aus diesem heraus, eines zweiten Bauelements zu bewegen, gemäß dem Oberbegriff von Anspruch 1.

Verschiebbar angeordnete Verriegelungselemente dieser Art sind aus der Praxis für verschiedene Zwecke bekannt.

Durch die Erfindung soll die Aufgabe gelöst werden, die Funktionssicherheit zu verbessern und gleichzeitig eine Ausführungsform zu finden, welche nur eine geringe Bauhöhe hat, unverlierbar ist und vielseitiger verwendbar ist.

Diese Aufgabe wird gemäß der Erfindung durch die kennzeichnenden Merkmale von Anspruch 1 gelöst.

Durch die Erfindung ergeben sich insbesondere folgende Vorteile:

Durch Steck- oder Rastverbindung in der Verriegelungsstellung eine gesicherte Verriegelung. Sowohl in der Verriegelungsstellung als auch in der Entriegelungsstellung wird das Verriegelungselement im Schlitz des ersten Bauelements gehalten und kann dadurch nicht verloren gehen. Die Entriegelungsstellung ist durch das Stecken oder Rasten des Verriegelungselements in den Schlitz eindeutig definiert. Das Verriegelungselement kann ohne Werkzeug oder Vorrichtungen auf einfache Weise montiert und demontiert werden. Das Verriegelungselement kann eine sehr kleine Bauhöhe von beispielsweise nur 1,2 mm haben. Das Verriegelungselement ist sehr vielseitig verwendbar, beispielsweise um Glasplatten bei Dunstabzugshauben oder Essen in ihrer Lage zu halten, ferner als Verschlußelement für Klappen, Türen, Rahmenteile beliebiger Art, zur Lagesicherung von Einlegeteilen wie beispielsweise Bilder in Bilderrahmen, Glasvitrinen, Zwischenböden im Möbelbau und dergleichen. Das Verriegelungselement kann in jeder beliebigen Lage links oder rechts, unten oder oben, aufrecht oder über Kopf (umgekehrt) verwendet werden.

Weitere Merkmale der Erfindung sind in den Unteransprüchen enthalten.^

Die Erfindung wird im folgenden mit Bezug auf die Zeichnungen anhand einer bevorzugten Ausführungsform als Beispiel beschrieben. In den Zeichnungen zeigen
- Fig. 1: einen vertikalen Längsschnitt durch ein Verriegelungselement nach der Erfindung in schräger Lage beim Einsetzen in einen T-förmigen Schlitz eines ersten Bauelements,
- Fig. 2: das Verriegelungselement von Fig. 1 beim Umklappen auf das erste Bauelement,
- Fig. 3: das Bauelement nach den Fig. 1 und 2 nach dem Verrasten (Einstecken oder Einschnappen) in den Schlitz in der Verriegelungsstellung,
- Fig. 4: das Verriegelungselement von Fig. 1, nachdem es von er Position von Fig. 3 entrastet und in Entriegelungsstellung bewegt wurde, wobei ein Fangarm einen hinteren Querrand des Schlitzes untergreift und dadurch ein Herausfallen des Verriegelungselements verhindert,
- Fig. 5: eine Draufsicht auf das Verriegelungselement in Verriegelungsstellung mit beiden Bauelementen,
- Fig. 6: das Verriegelungselement in vergrößerter Draufsicht ohne die zu verriegelnden Bauelemente,
- Fig. 7: eine Seitenansicht des Verriegelungselements von Fig. 6,
- Fig. 8: einen Längsschnitt längs der Ebene VIII-VIII von Fig. 6 und
- Fig. 9: einen Querschnitt längs der Ebene IX-IX von Fig. 6.

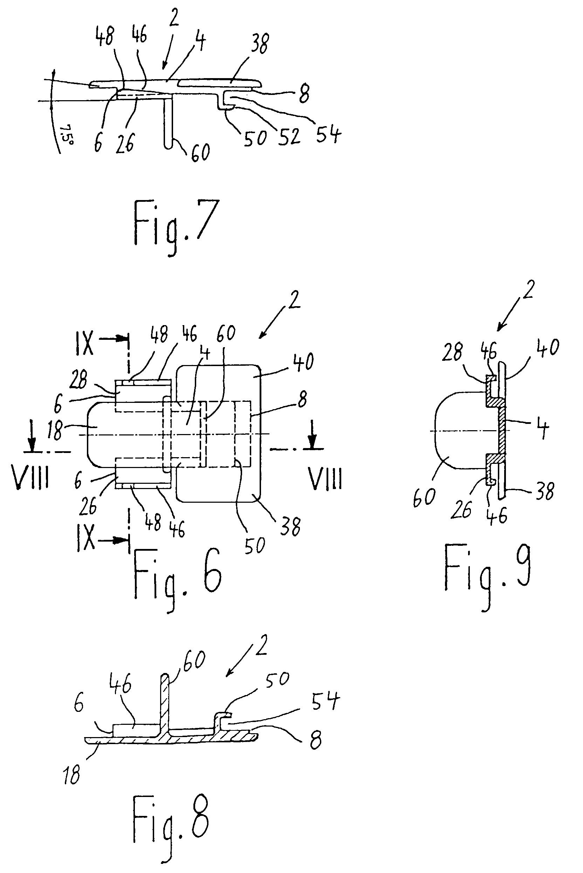

Das Verriegelungselement 2 nach der Erfindung besteht vorzugsweise insgesamt aus einem einstückigen Körper aus Metall oder vorzugsweise aus Kunststoff. Es enthält einen plattenartigen flachen, sehr dünnen, beispielsweise nur 1,0 bis 1,4 mm dicken Grundkörper 4. Das Verriegelungselement 2 hat nach unten weg ragende, voneinander weg nach vorne bzw. nach hinten zeigende Steckflächen oder Rastenflächen 6 und 8 zum Einstecken oder Einrasten des Verriegelungselements 2 in Verriegelungsstellung gemäß Fig. 3 und 5 zwischen die vorderen und hinteren Querflächen 10 und 12, die neben oder in einem Schlitz 16 eines ersten Bauelements 14 gebildet sind. Bei der dargestellten bevorzugten Ausführungsform ist die hintere Querfläche 12 der hintere Querrand des Schlitzes 16; und die vordere Querfläche 10 ist durch Stirnflächen eines Randabsatzes 24 des ersten Bauelements 14 beidseitig neben dem vorderen Ende des Schlitzes 16 gebildet.

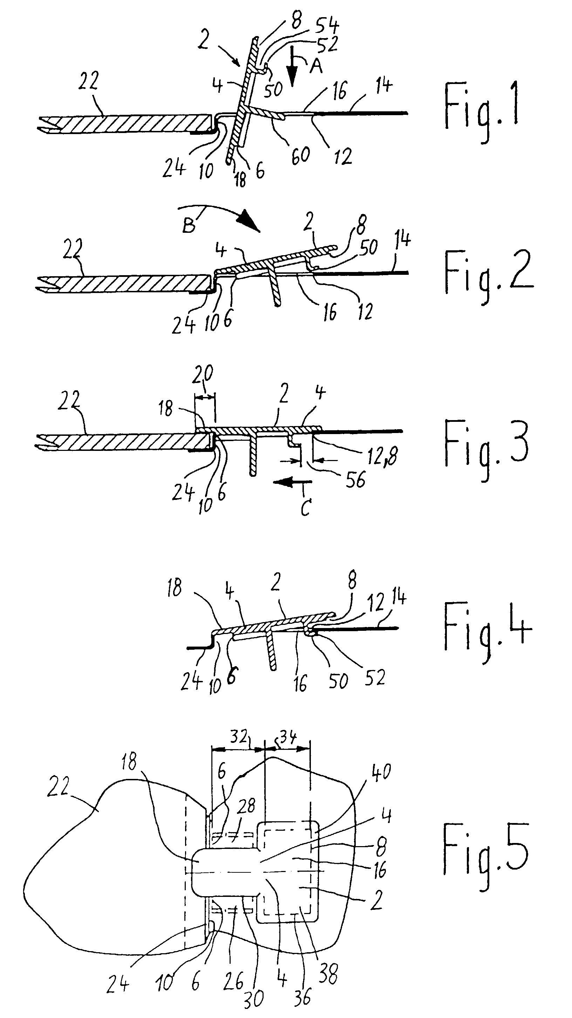

Ein Verriegelungsteil 18 ist eine zungenartige Verlängerung des Grundkörpers 4 mit vorzugsweise gleicher Dicke und gleicher Breite wie der Grundkörper. Der Verriegelungsteil 18 erstreckt sich über die vordere Steck- oder Rastenfläche 6 um eine Strecke 20 nach vorne hinaus, welche mindestens so lang ist wie die Verriegelungsstrecke, um welche das Verriegelungselement 2 von der in den Figuren 2 und 4 dargestellten Entriegelungsstellung in die Verriegelungsstellung von Fig. 3 bewegt werden muß, um den Rand eines zweiten Bauelements 22 zu übergreifen und dadurch in einem Randabsatz 24 des ersten Bauelements 14 zu halten.

Der Grundkörper 4 hat auf einem vorderen Abschnitt zwei entgegengesetzt voneinander seitlich wegragende Untergreif-Flügel 26 und 28 zum Untergreifen der einander gegenüber liegenden Längsränder 30 eines vorderen Schlitzabschnittes 32, welcher beidseitig schmäler ist als ein in der Breite erweiterter hinterer Schlitzabschnitt 34 des Schlitzes 16, was insbesondere aus den Figuren 1 und 5 ersichtlich ist. Die Längsränder des breiteren hinteren Schlitzabschnittes 34 sind mit 36 bezeichnet. Die Untergreif-Flügel 26 und 28 bilden an ihren abgewinkelten äußeren Flügelenden je an der vorderen Stirnseite eine nach vorne zeigende Steck- oder Rastenfläche 6 und erstrecken sich von dort nach hinten bis ungefähr zur halben Länge des Verriegelungselements.

Der Grundkörper 4 hat an einem hinteren Abschnitt zwei entgegengesetzt voneinander seitlich wegragende Übergreif-Flügel 38 und 40 zum Übergreifen der Längsränder 36 des breiteren hinteren Schlitzabschnittes 34 und des hinteren Querrandes 12 des Schlitzes 16. Die Übergreif-Flügel 38 und 40 haben einen kurzen Abstand in Schlitzlängsrichtung von den Untergreif-Flügeln 26 und 28 und erstrecken sich nach hinten bis über die unter ihnen nach unten sich weg streckende, nach hinten zeigende Steck- oder Rastenfläche 8 des Grundkörpers 4.

Die hinteren Übergreif-Flügel 38 und 40 sind mit Bezug auf die vorderen Untergreif-Flügel 26 und 28 in Längsrichtung des Schlitzes 16 und relativ zueinander um die Dicke 44 des ersten Bauelements 14 höhenversetzt zueinander angeordnet, so daß die untere Oberfläche der Übergreif-Flügel 38 und 40 von der oberen Oberfläche der Untergreif-Flügel 26, 28 einen Höhenabstand hat, welcher gleich der Dicke 44 des ersten Bauelements 14 ist. Dadurch liegt der Grundkörper 4 in eingerasteter Verriegelungsstellung gemäß Fig. 3 in einer Ebene parallel zu den Ebenen der beiden Bauelemente 14 und 22. Die Oberfläche des Grundkörpers 4 und der Übergreif-Flügel 38 und 40 sind vollständig eben oder flach und liegen in der gleichen Ebene.

Die Untergreif-Flügel 26 und 28 sind gegenüber der Ebene des Grundkörpers 4 nach unten und nach außen abgekröpft ausgebildet und haben an ihren Enden nach oben ragende Rippen 46, deren höchste Stelle 48 die Fläche ist, welche die vorderen Längsränder 30 des Schlitzes 16 seitlich untergreift und an der Unterseite des ersten Bauelements 14 anliegt, wenn das Bauelement in Verriegelungsstellung ist.

Die Spannweite der Untergreif-Flügel 26 und 28 ist kleiner als die Spannweite der Übergreif-Flügel 38 und 40 und auch etwas kleiner als die Breite des hinteren Schlitzabschnittes 34. Dadurch kann das Verriegelungselement mit seinen Untergreif-Flügeln 26 und 28 voraus durch den breiteren hinteren Schlitzabschnitt 34 des Schlitzes 16 gemäß Fig. 1 hindurchgeführt, und dann gemäß Fig. 2 nach vorne geschoben und nach unten geklappt werden, um die Untergreif-Flügel 26 und 28 unter die vorderen Längsränder 30 des Schlitzes 16 zu schieben.

Die äußeren Rippen 46 der Untergreif-Flügel 26 und 28 haben von der an oder nahe ihrem vorderen Ende gelegenen höchsten Rippenstelle 48 eine nach hinten abnehmende Höhe, um das Einführen und Kippen des Bauelements gemäß den Figuren 1 und 2 zu erleichtern.

Ein Haken oder Fangarm 50 ragt vom hinteren Abschnitt des Grundkörpers 4 nach unten und dann mit vertikalem Abstand vom Grundkörper 4 nach hinten, so daß sein freies Ende 52 nach hinten zeigt und zwischen dem nach hinten ragenden Teil des Fangarmes 50 und der Unterseite des Grundkörpers 4 ein nach hinten offener Zwischenraum 54 gebildet ist, welcher unterhalb der hinteren Steck- oder Rastenfläche 8 liegt. Das hintere Armende 52 ist gegenüber der hinteren Steck- oder Rastenfläche 8 tiefer angeordnet und um eine Strecke 56 nach vorne zurückversetzt, welche kürzer ist als die Verriegelungsstrecke 20. Dadurch untergreift der Fangarm 50 den hinteren Querrand 12 des Schlitzes 16, wenn das Verriegelungselement in oder nahe bei der Entriegelungsstellung ist, jedoch nicht, wenn das Verriegelungselement in oder nahe bei der Verriegelungsstellung ist. Die Aufgabe des Fangarmes 50 ist es, ein Herausfallen des Verriegelungselementes nach oben zu verhindern. Zu diesem Zwecke muß der Fangarm 50 soweit wie möglich nach hinten sich erstrecken. Diese Erstreckung nach hinten wird jedoch dadurch begrenzt, daß das hintere Fangarmende 52 beim Einsetzen in den Schlitz 16 in der Entriegelungsstellung am hinteren Querrand 12 des Schlitzes 16 vorbei bewegt werden muß, um von der in Fig. 2 gezeigten Stellung in die in Fig. 3 gezeigte Stellung zu gelangen. In der Verriegelungsstellung wird das Verriegelungselement durch seine Steckverbindung mit den Rändern oder Randnebenflächen des Schlitzes 16 in Position gehalten. In Entriegelungsstellung gemäß Fig. 4 verhindert dann der Haken oder Fangarm 50 ein Herausfallen des Verriegelungselementes. Der Grundkörper 4 ist auf der Unterseite mit einem Betätigungsgriff 60 versehen, welcher die Form einer quer zum Grundkörper sich nach unten erstreckenden Platte hat und mit dem Grundkörper aus einem Stück besteht. Der Betätigungsgriff kann an beliebiger Stelle angeordnet werden, jedoch vorzugsweise gemäß den Zeichnungen innerhalb des hinteren Endbereiches der Untergreif-Flügel 26 und 28, mittig zwischen ihnen. Gemäß anderer Ausführungsform kann der Betätigungsgriff 60 auf der dazu abgewandten oberen Seite des Grundkörpers 4 angeordnet sein, was von dem vorgesehenen Verwendungszweck des Verriegelungselements abhängig ist.

Das Verriegelungselement kann in jeder beliebigen horizontalen, vertikalen, oder schrägen Lage oder auch umgekehrt (kopfüber) angeordnet werden, ohne daß es funktionsunfähig wird oder aus dem Schlitz in der Verriegelungsstellung oder in der Entriegelungsstellung herausfällt. Deshalb sind die hier verwendeten Ausdrücke 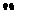 oben, unten, vorne, hinten" nur als Beispiele stellvertretend zu verstehen und nur zur leichteren Darstellung verwendet, ohne den Schutzumfang darauf zu beschränken, sondern sind sinngemäß auch umgekehrt zu verstehen, so daß 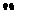 unten" auch 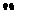 oben" sein kann und umgekehrt und 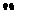 vorne" und 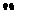 hinten" können vertauscht sein.

Die aufeinanderfolgenden Einbaubewegungen des Verriegelungselements 2 sind in den Figuren 1, 2 und 3 mit Pfeilen A, B und C angegeben.

## Patentansprüche

1. Verriegelungselement, welches in einem Schlitz (16) eines ersten Bauelements (14) zwischen einer Verriegelungsstellung und einer Endriegelunsstellung in Schlitzlängsrichtung verstellbar ist, um einen Verriegelungsteil (18) des Verriegelungselements in einen zu sperrenden Bewegungsweg, bzw. aus diesem heraus, eines zweiten Bauelements (22) zu bewegen, **dadurch gekennzeichnet,** daß das Verriegelungselement (2) mit Steckerflächen (6, 8) oder Rastenflächen zum Stecken oder Einrasten zwischen Gegenflächen des ersten Bauelements (14) in oder neben dem Schlitz in Richtung senkrecht zur Schlitzöffnung in Verriegelungsstellung ausgebildet ist.

2. Verriegelungselement nach Anspruch 1, **dadurch gekennzeichnet,** daß es auf seiner Unterseite einen Fangarm (50) aufweist, welcher gegenüber den Stecker- oder Rastenflächen (6, 8) um eine Strecke (56) zurückgesetzt ist, welche ein Einsetzen des Verriegelungselementes (16) in den Schlitz (16) und den Steckvorgang in der Verriegelungsstellung ermöglicht, jedoch kürzer ist als die Verriegelungsstrecke von der Verriegelungsstellung zur Entriegelungsstellung, so daß der Fangarm (50) in und nahe bei der Entriegelungsstellung einen hinteren Querrand (12) des Schlitzes (16) untergreift und dabei ein Herausfallen des Verriegelungselements aus dem Schlitz verhindert.

3. Verriegelungselement nach Anspruch 1 oder 2, **dadurch gekennzeichnet,** daß es einen Grundkörper (4) aufweist, daß der Grundkörper (4) auf seinem vorderen Abschnitt zwei entgegengesetzt voneinander seitlich wegragende Untergreif-Flügel (26, 28) zum Untergreifen der beiden seitlichen Längsränder (30) des Schlitzes (16) hat, und daß der Grundkörper (4) auf einem hinteren Abschnitt zwei entgegengesetzt voneinander seitlich wegragende Übergreif-Flügel (38,40) zum Übergreifen der beidseitigen Längsränder (36) des Schlitzes (16) hat, wobei die Übergreif-Flügel (38, 40) relativ zu den Üntergreif-Flügeln (26, 28) in Schlitzlängsrichtung versetzt zueinander angeordnet sind und die als Stützflächen dienenden unteren Oberflächen der Übergreif-Flügel (38, 40) und oberen Oberflächen der Untergreif-Flügel (26, 28) um die Höhe der Schlitzränder (30, 36, 12) höhenversetzt zueinander angeordnet sind und in eingestecktem Zustand des Verriegelungselements an der Unterseite bzw. an der Oberseite des ersten Bauelements (14) anliegen.

4. Verriegelungselement nach einem der Ansprüche 1 bis 3, **dadurch gekennzeichnet,** daß die Steck- oder Rastenflächen (6, 8) voneinander weg nach vorne und nach hinten zeigende Flächen sind zum Einstecken oder Einrasten zwischen vorderen und hinteren Querrandbereichen (10, 12) des Schlitzes (16) in Verriegelungsstellung.

5. Verriegelungselement nach Anspruch 3 oder 4**, dadurch gekennzeichnet,** daß die Übergreif-Flügel (38, 40) eine größere Spannweite als die Untergreif-Flügel (26, 28) haben zur Überdeckung eines gegenüber einem vorderen Abschnitt (32) beidseitig breiteren hinteren Abschnitt (34) des Schlitzes (16), und daß die Untergreif-Flügel (26, 28) eine Spannweite haben, welche wenig kleiner ist als die Breite des hinteren Schlitzabschnittes (34).

6. Verriegelungselement nach einem der vorhergehenden Ansprüche, **dadurch gekennzeichnet,** daß es einen Betätigungsgriff (60) aufweist.

7. Betätigungselement nach Anspruch 6, **dadurch gekennzeichnet,** daß der Betätigungsgriff (60) sich auf der dem Schlitz zugewandten Unterseite des Verriegelungselements befindet.

8. Verriegelungselement nach einem der vorhergehenden Ansprüche, **dadurch gekennzeichnet,** daß es eine plattenartig dünne Grundform hat.

9. Verriegelungselement nach einem der vorhergehenden Ansprüche, **dadurch gekennzeichnet,** daß alle seine Teile einstückig aus einem einzigen Materialkörper bestehen.
